# EUROPEAN PATENT APPLICATION

(11) **EP 4 847 969 A1**
(43) Date of publication of application: **02.12.2026**
(21) Application number: 26181581.5
(22) Date of filing: 28.05.2026
(51) Int. Cl.: G01V 1/00, G01H 9/00, G01V 1/22

(54) **HYBRID MULTICOMPONENT SEISMIC SURVEY USING GEOPHONES AND FIBER OPTICS**

(30) Priority: 29.05.2025 US 202519221679
(71) Applicant: Services Pétroliers Schlumberger, 75007 Paris (FR); GeoQuest Systems B.V., 2514 JG The Hague (NL)
(72) Inventor: BUSANELLO, Gabriele, 11728 Cairo (EG); BACHRACH, Ran, Denver, 80202-4675 (US); SAYED, Ali Yawar, Houston, 77042 (US); RE, Simone, 20097 Milan (IT)
(74) Representative: Schlumberger Intellectual Property Department

(57) **Abstract**

Techniques for performing a multicomponent seismic survey are presented. The techniques may include: deploying a plurality of geophones at seismic receiver station locations to produce a layout of vertical component seismic sensors; deploying at least one fiber optic cable to produce a layout of horizontal crossline component seismic sensors and horizontal inline component seismic sensors at the seismic receiver station locations; obtaining a set of vertical component traces using the layout of vertical component seismic sensors; obtaining, simultaneously with the obtaining the set of vertical component traces, a set of horizontal crossline component traces and a set of horizontal inline component using the layout of horizontal crossline component seismic sensors and the horizontal inline component seismic sensors; and combining the set of horizontal crossline component traces, the set of horizontal inline component traces, and the set of vertical component traces to produce a multicomponent seismic dataset.

## Description

### Background

In general, multicomponent (e.g., 3C) seismic nodes or cable systems are expensive and difficult to mobilize for high-density high-trace count seismic acquisitions. By contrast, single-component geophones are affordable and easily available in bulk, but they are limited to the vertical (z-axis) of the recording. Fiber optic cable sensing can be deployed efficiently, but it is sensitive only to the horizontal component of seismic wavefields due to its sensitivity to directionality. Therefore, what is needed is an improved system and method for performing a hybrid multicomponent seismic survey (e.g., using geophones and fiber optics).

### Summary

According to various embodiments, a method, system, and non-transitory computer-readable media for performing a multicomponent seismic survey are presented. Disclosed techniques include: defining a grid of seismic receiver station locations on a surface region of the Earth; deploying a plurality of geophones at the seismic receiver station locations, wherein each geophone of the plurality of geophones comprises one of an inductive sensor, a piezoelectric sensor, or a Micro-Electro-Mechanical Sensor (MEMS), whereby a grid of vertical component seismic sensors at the grid of seismic receiver station locations is configured; deploying at least one fiber optic cable on the surface region, wherein the at least one fiber optic cable intersects each seismic receiver station location twice, wherein the at least one fiber optic cable is coupled to at least one interrogator, wherein the at least one interrogator is configured to convert backscatter from at least one laser to a value of one of strain or strain rate, whereby a grid of horizontal crossline component seismic sensors and horizontal inline component seismic sensors at the grid of seismic receiver station locations is configured; initiating a seismic shot at a shot point in the surface region; obtaining, for each seismic receiver station location, a vertical component trace of reflections of the seismic shot, whereby a set of vertical component traces for the grid of seismic receiver station locations is obtained; obtaining, simultaneously with and independently from the obtaining the vertical component trace of the reflections of the seismic shot, and for each seismic receiver station location, a horizontal crossline component trace of the reflections of the seismic shot and a horizontal inline component trace of the reflections of the seismic shot, whereby a set of horizontal crossline component traces and a set of horizontal inline component traces for the grid of seismic receiver station locations is obtained, wherein the obtaining the set of horizontal crossline component traces and the set of horizontal inline component traces comprises selecting positions along the at least one fiber optic cable that correspond to the grid of seismic receiver locations; transforming a domain of the set of horizontal crossline component traces and a domain of the set of horizontal inline component traces to a domain of the set of vertical component traces, wherein the domain of the set of horizontal crossline component traces and the domain of the set of horizontal inline component traces comprises one of strain or strain rate, and wherein the domain of the set of vertical component traces comprises one of velocity or acceleration; applying at least one matching filter to match frequency spectra and timing between (1) the set of horizontal crossline component traces and the set of horizontal inline component traces and (2) the of the set of vertical component traces; combining the set of horizontal crossline component traces, the set of horizontal inline component traces, and the set of vertical component traces, from which a multicomponent seismic dataset is obtained, wherein the combining comprises assigning multicomponent trace header information to each of the set of horizontal crossline component traces, the set of horizontal inline component traces, and the set of vertical component traces; storing the multicomponent seismic dataset; displaying a representation of a subsurface of the surface region based on the multicomponent seismic dataset; and drilling a wellbore in the surface region based on the multicomponent seismic dataset.

Various optional features include the following. The at least one fiber optic cable may intersect each of the seismic receiver station locations at perpendicular angles. The obtaining the set of horizontal crossline component traces and the set of horizontal inline component traces may include setting values for the at least one interrogator, where the values include a recording rate and a gauge length. The applying may further include matching amplitudes, bandwidths, and phases between (1) the set of horizontal crossline component traces and the set of horizontal inline component traces and (2) the of the set of vertical component traces. The combining may include performing vector rotation to assign orientations.

It will be appreciated that this summary is intended merely to introduce some aspects of the present methods, systems, and media, which are more fully described and/or claimed below. Accordingly, this summary is not intended to be limiting.

### Brief Description of the Drawings

The accompanying drawings, which are incorporated in and constitute a part of this specification, illustrate embodiments of the present teachings and together with the description, serve to explain the principles of the present teachings. In the figures:
**Figure 1** illustrates an example of a system that includes various management components to **manage** various aspects of a geologic environment, according to an embodiment.
**Figure 2** illustrates an example layout of seismic receiver stations, according to an embodiment.
**Figure 3** illustrates a flow diagram for a process for obtaining a multicomponent seismic survey file, according to an embodiment.
**Figure 4** illustrates a flowchart of a method for performing a multicomponent seismic survey, according to an embodiment.
**Figure 5** illustrates a schematic view of a computing system for performing at least a portion of the method of performing a multicomponent seismic survey, according to an embodiment.

### Detailed Description

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques, and workflows that are in accordance with some embodiments. Some operations in the processing procedures, methods, techniques, and workflows disclosed herein may be combined and/or the order of some operations may be changed.

### System Overview

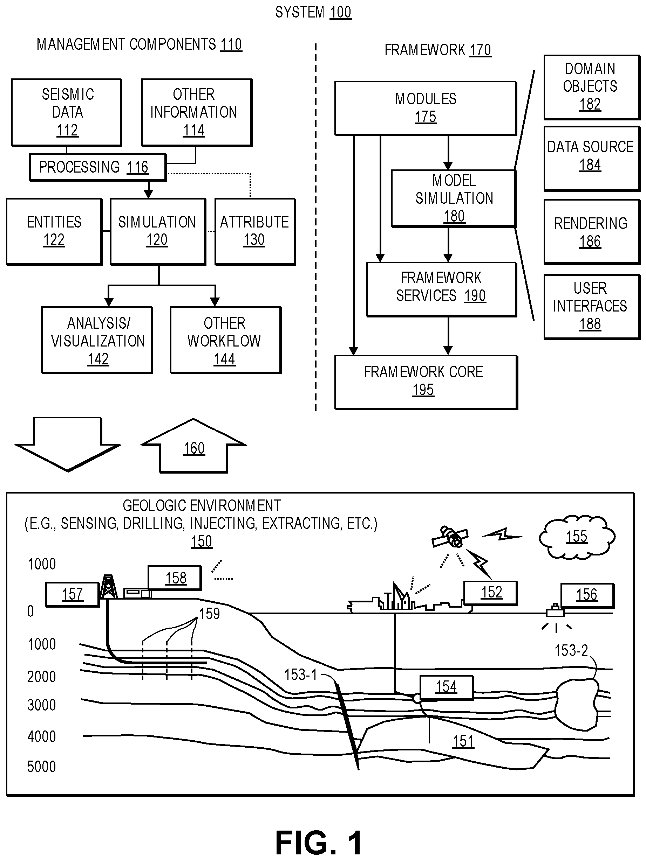

**Figure 1** illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of **Figure 1****,** the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes can be used to instantiate object instances for use in a program, script, etc. For example, borehole classes may define objects for representing boreholes based on well data.

In the example of **Figure 1****,** the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of **Figure 1****,** the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{™} reservoir simulator (SLB, Houston Texas), the INTERSECT^{™} reservoir simulator (SLB, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example embodiment, the management components 110 may include features of a commercially available framework such as the PETREL^{®} seismic to simulation software framework (SLB, Houston, Texas). The PETREL^{®} framework provides components that allow for optimization of exploration and development operations. The PETREL^{®} framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN^{®} framework environment (SLB, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

**Figure 1** also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example embodiment, the PETREL^{®} software may be considered a data-driven application. The PETREL^{®} software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of **Figure 1****,** the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of **Figure 1****,** data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of **Figure 1****,** the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, **Figure 1** shows a satellite in communication with the network 155 that may be configured for communications, noting that the satellite may additionally or instead include circuitry for imagery (e.g., spatial, spectral, temporal, radiometric, etc.).

**Figure 1** also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

*Hybrid Multicomponent Seismic Survey Using Geophones And Fiber Optics*

The present disclosure describes techniques for acquiring multicomponent seismic survey data using multiple detection modalities. Some embodiments use a combination of geophones and fiber optic cable sensing deployed on a region of the Earth's surface to allow for recording of an entire seismic wavefield. According to some embodiments, a nodal vertical geophone records the vertical z-axis components, while a grid of fiber optic cable is deployed to intersect the positions of each geophone twice in different directions so as to record the horizontal x-axis and horizontal *y*-axis components.

According to some embodiments, the three vector components of a seismic wavefield are recorded simultaneously by deploying vertical geophones and collocated fiber optic cable that intersect at the same location of each geophone so as to record the horizontal components of the wavefield. The geophone and the fiber optic cable seismic dataset may be harvested independently. The fiber optic cable recording may be digitalized, and the positions along the fiber optic cable that are collocated with the geophone may be selected. A domain transformation and calibration may be performed to match the different recording domains. The combined components may then be used for multicomponent seismic processing.

These and other features and advantages are shown and described presently in reference to the figures.

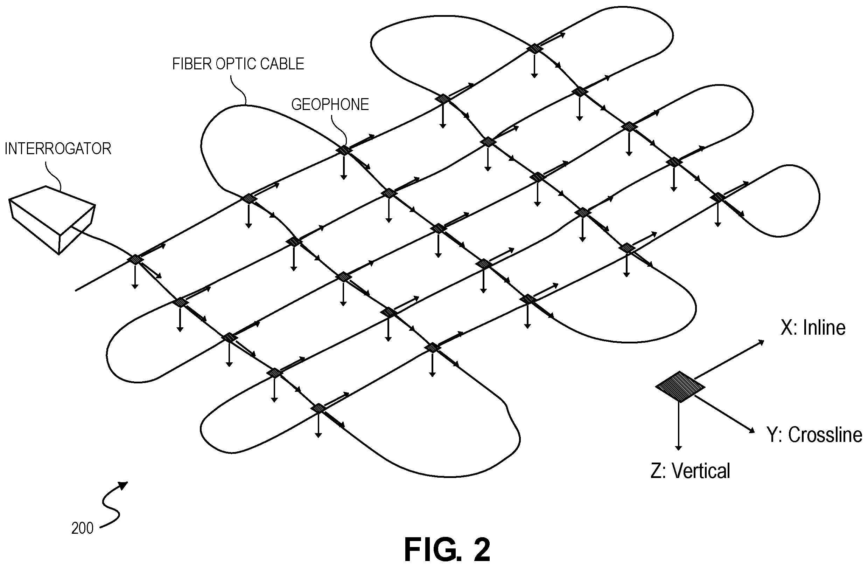

**Figure 2** illustrates an example layout 200 of seismic receiver stations, according to an embodiment. Each seismic receiver station location includes a geophone and an intersection of a fiber optic cable.

The layout 200 of the seismic receiver station locations shown in **Figure 2** is a regular orthogonal grid, by way of non-limiting example. However, embodiments are not so limited. In general, the layout according to an embodiment may be a grid or other regular arrangement of seismic receiver station locations, may selected according to a random distribution, or may be selected according to any other pattern or criteria.

Each geophone may be implemented using, by way of non-limiting example, inductive sensors, piezoelectric sensors, and/or Micro-Electrical-Mechanical Sensors (MEMS). Each geophone is configured to obtain a vertical (z-axis) component of a seismic wavefield at its respective seismic receiver station location.

The fiber optic cable is coupled to an interrogator, which converts backscatter from a laser beam to respective values that represents detected seismic waves in the direction of the cable at locations throughout the cable. Each value may be in the form of a strain value or a strain rate value. The interrogator may accept as parameters a recording rate, a spatial sampling length, and/or a gauge length. Because the interrogator may obtain seismic wave data at positions along the length of the cable in the direction of the cable, and because the cable intersects itself at each seismic receiver location, the interrogator can capture a horizontal inline direction component and a horizontal crossline direction at each seismic receiver station. These components may be extracted from an output from the interrogator that includes values from throughout the fiber optic cable.

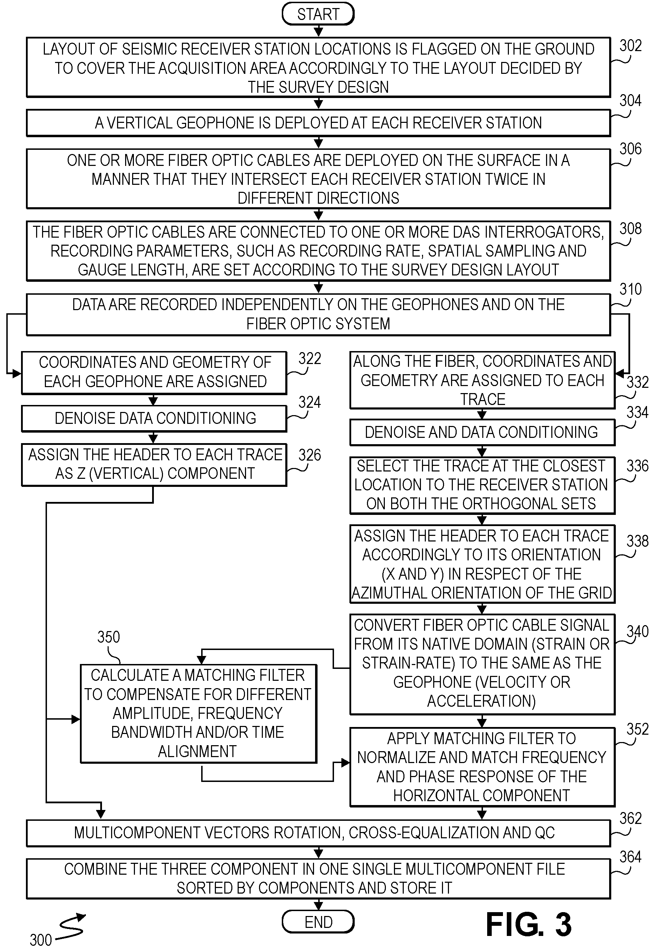

**Figure 3** illustrates a flow diagram for a process for obtaining a multicomponent seismic survey file, according to an embodiment. The process 300 may be performed consistent with a seismic receiver station layout as shown and described herein in reference to **Figure 2****,** for example.

At 302, a layout of seismic receiver station locations is flagged on a surface region of the Earth. Any of a variety of layout designs may be selected. According to some embodiments, the layout design is a grid pattern, e.g., with the locations defining a rectilinear-such as orthogonal or orthonormal-array. According to some embodiments, the locations may be spaced at regular intervals, such that the locations define corners of a plurality of squares, rectangles, rhombuses, or parallelograms. Note that embodiments are not limited to regular arrangements of seismic receiver station locations. For example, according to some embodiments, the layout may be selected according to a random distribution. The random distribution may be a two-dimensional uniform distribution, a two-dimensional normal distribution, a two-dimensional Poisson distribution, or any other type of distribution. According to some embodiments, the random distribution may be selected to facilitate compressive sensing.

At 304, a geophone is deployed at each seismic receiver station location to capture seismic wave components in the vertical (z-axis) direction. Any of a variety of geophone technologies may be used, including, by way of non-limiting example, inductive sensors, piezoelectric sensors, and/or Micro-Electrical-Mechanical Sensors (MEMS). The geophones are deployed to capture the vertical components of seismic waves.

At 306, one or more fiber optic cables are deployed in the surface region such that, at each seismic receiver location, the cable(s) intersect. At each seismic receiver location, the cable(s) may intersect at right angles, at roughly right angles, or at essentially any angle that prevents the cables from being parallel.

At 308, the fiber optic cable(s) are connected to one or more interrogators. By way of non-limiting example, the interrogator(s) may be Distributed Acoustic Sensing (DAS) interrogator(s). The interrogator(s) may convert backscatter from one or more lasers to a value of strain or strain rate, which represents seismic waves in the direction of the cable at particular locations. Parameters may be selected for the interrogator(s), including one or more of: recording rate, spatial sampling length, and/or gauge length. The interrogators may thus produce data that represents horizontal seismic wave components at positions along the length of the cable(s). In particular, at or near each seismic receiver location, the interrogators may capture horizontal seismic wave components in both directions of the intersecting cable(s), e.g., in a horizontal inline (x-axis) direction and a horizontal crossline (y-axis) direction.

At 310, data may be recorded independently from the geophones and the interrogators. The data from the interrogators may be selected for positions along the fiber optic cable(s) that correspond to the seismic receiver locations. The geophones and interrogators may be communicatively coupled to one or more data recorders, such as computers, which may record the data by storage in electronic memory.

Optionally, according to some embodiments, prior to 310, a seismic shot may be initiated in or near the region, and the data recorded at 310 may represent reflections of the seismic shot. According to other embodiments, the data recorded at 310 may represent passive recording. These latter embodiments may be useful for case long term monitoring, by way of non-limiting example.

The captured vertical and horizontal (including horizontal inline and horizontal crossline) components may be initially processed separately in parallel, as shown in Fig. 3 and described presently.

At 324, for each geophone, the corresponding acquired data is assigned the coordinates of the seismic receiver station and a geometry (e.g., a designation of vertical). At 324, the vertical component traces from each geophone are denoised and conditioned. At 326, each vertical component trace is assigned a header that indicates that the trace is for a vertical component of reflections of a seismic shot.

At 332, each trace acquired by the interrogator from the fiber optic cable is assigned the coordinates of the location on the fiber optic cable from which is was acquired. A geometry designation may also be assigned (e.g., horizontal crossline or horizontal inline). At 334, the horizontal component traces are denoised and conditioned. At 336, the traces from the locations in the fiber optic cable that are closest to the seismic receiver station locations are selected for both the crossline and inline horizontal components. At 338, each trace for a horizontal component is assigned a header that indicates that the trace is for a horizontal component, either inline or crossline, of reflections of a seismic shot.

At 340, the traces acquired using the fiber optic cable are converted from their native domain, such as strain or strain rate, to the domain of the geophone, e.g., velocity or acceleration. Any of a variety of transforms may be used to accomplish the conversion. Note that according to some embodiments, instead of the aforementioned conversion, the domain of the vertical component trace (e.g., velocity or acceleration) is converted to the domain of the horizontal component traces (e.g., strain or strain rate).

The actions of 350 and 352 account for differences between the vertical component traces and the horizontal component traces in terms of one or both of: signal spectra (including, e.g., individual frequency amplitude and/or overall signal amplitude), and timing (including, e.g., gross timing and/or phase matching). At 350, one or more matching filters are calculated to compensate for different amplitudes, frequencies, bandwidths, frequency spectra distributions, and/or time alignments between the vertical component traces and the horizontal component traces. For example, a single matching filter may be calculated to perform multiple such compensations, or multiple matching filters may be calculated to each perform one (or more) compensations. At 352, the matching filter(s) are applied to align times and phases, and match amplitudes, frequencies, bandwidths, and/or frequency spectra distributions. The matching filter(s) may be applied to the vertical component traces, the horizontal traces, or both, according to various embodiments.

At 362, the traces are rendered according to their respective geometric orientations, which may include rotating or reassigning one or more vectors in space from its existing orientation to its intended orientation. For example, the actions of 362 may be used to ensure that the traces represent orthogonal (perpendicular) components of the multicomponent seismic wave detections, even if the sensors themselves were not orthogonal. As another example, the actions of 362 may include aligning the components according to the azimuth of the source. The actions of 362 may further include cross equalization and/or quality control.

At 364, the vertical component trace, the inline horizontal component trace, and the crossline horizontal component trace are combined into a single file. The actions of 364 may include assigning multicomponent trace header information to each of horizontal crossline component traces, the horizontal inline component traces, and the vertical component traces. Such multicomponent header information may include orientation literals, trace identification, and/or other information.

### Exemplary Method

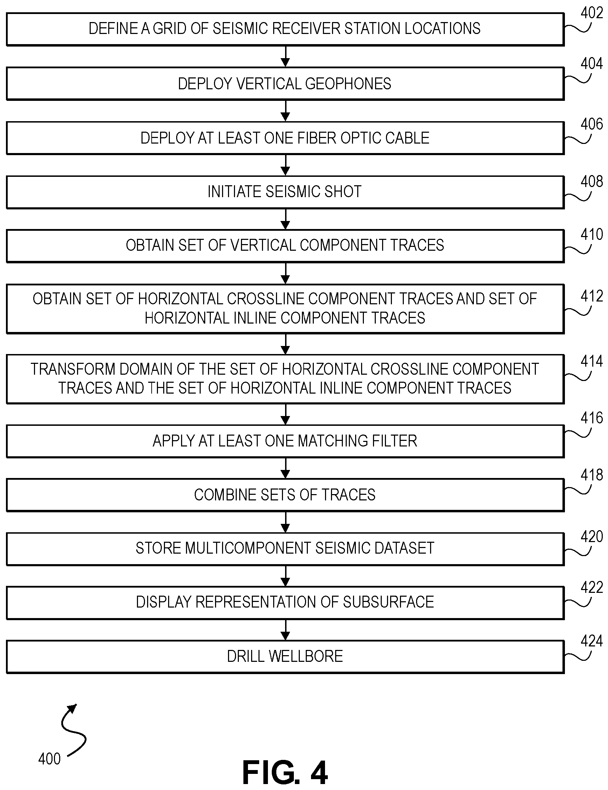

**Figure** 4 illustrates a flowchart of a method for performing a multicomponent seismic survey, according to an embodiment. An illustrative order of the method 400 is provided below; however, one or more portions of the method 400 may be performed in a different order, simultaneously, repeated, or omitted. At least a portion of the method 400 may be performed by a computing system (described below).

The method 400 may include defining a grid of seismic receiver station locations on a surface region of the Earth, as at 402.

The method 400 may include deploying a respective geophone at a respective seismic receiver station location, as at 404. Each respective geophone may include an inductive sensor, a piezoelectric sensor, or a Micro-Electro-Mechanical Sensor (MEMS). The actions of 404 may configure a grid of vertical component seismic sensors at the grid of seismic receiver station locations.

The method 400 may include deploying at least one fiber optic cable on the surface region, as at 406. The fiber optic cable(s) may intersect each respective seismic receiver station location twice. The fiber optic cable(s) may be coupled to one or more interrogators, where each interrogator is configured to convert backscatter from one or more lasers to a value of one of strain or strain rate. The actions of 406 may configure a grid of horizontal crossline component seismic sensors and horizontal inline component seismic sensors at the grid of seismic receiver station locations.

The method 400 may include initiating a seismic shot at a shot point in the surface region, as at 408. The seismic shot may be initiated using an explosive, a dropped weight, or any other seismic shot technique. Note that the seismic shot of 408 is optional. Some embodiments may perform passive monitoring, for example.

The method 400 may include obtaining, for each respective seismic receiver station location, a corresponding respective vertical component trace of reflections of the seismic shot, as at 410. The actions of 410 may obtain a set of vertical component traces for the grid of seismic receiver station locations. Note that some embodiments may obtain vertical component traces without requiring a seismic shot.

The method 400 may include obtaining, simultaneously with and independently from the obtaining the respective vertical component trace of reflections of the seismic shot, and for each respective seismic receiver station location, a corresponding respective horizontal crossline component trace of the reflections of the seismic shot and a corresponding respective horizontal inline component trace of the reflections of the seismic shot, as at 412. The actions of 412 may obtain a set of horizontal crossline component traces and a set of horizontal inline component traces for the grid of seismic receiver station locations. The actions of 412 may include selecting positions along the fiber optic cable(s) that correspond to the grid of seismic receiver locations. Note that some embodiments may obtain horizontal crossline component traces and horizontal inline component traces without requiring a seismic shot.

The method 400 may include transforming a domain of the set of horizontal crossline component traces and a domain of the set of horizontal inline component traces to a domain of the set of vertical component traces, as at 414. The domain of the set of horizontal crossline component traces and the domain of the set of horizontal inline component traces may be strain or strain rate, and the domain of the set of vertical component traces may be velocity or acceleration.

The method 400 may include applying one or more matching filter to match frequency spectra and timing between, on the one hand, the set of horizontal crossline component traces and the set of horizontal inline component traces and, on the other hand, the of the set of vertical component traces, as at 416.

The method 400 may include combining the set of horizontal crossline component traces, the set of horizontal inline component traces, and the set of vertical component traces, as at 418. The actions of 418 may obtain a multicomponent seismic dataset. The actions of 418 may include assigning multicomponent trace header information to each of the set of horizontal crossline component traces, the set of horizontal inline component traces, and the set of vertical component traces.

The method 400 may include storing the multicomponent seismic dataset, as at 420.

The method 400 may include displaying a representation of a subsurface of the surface region based on the multicomponent seismic dataset, as at 422.

The method 400 may include drilling a wellbore in the surface region based on the multicomponent seismic dataset, as at 424. This action may be or include generating and/or transmitting a signal that recommends, instructs, or causes a physical action to occur at a wellsite that is proximate to a reservoir. The physical action may be or include selecting where to drill a wellbore, drilling the wellbore, varying a weight and/or torque on a drill bit that is drilling the wellbore, varying a drilling trajectory of the wellbore, or varying a concentration and/or flow rate of a fluid pumped into the wellbore.

Note that various other actions may be performed in addition to, or instead of, the wellbore drilling of 424. By way of non-limiting example, any of the following may be performed: changing a drilling direction (e.g., geosteering), stopping drilling, performing a simulation, or any other action that may be performed in response to obtaining a seismic survey.

### Exemplary Computing System

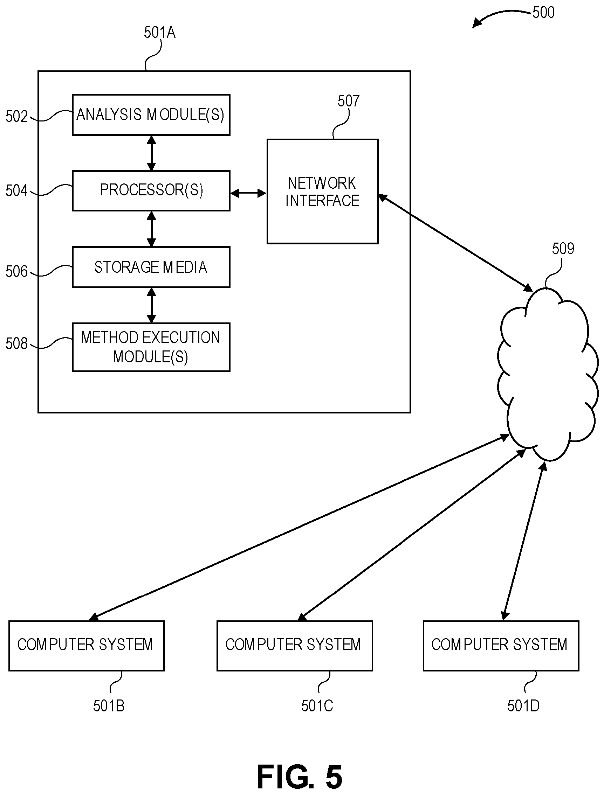

In various embodiments, the methods of the present disclosure may be executed by one or more computing systems. **Figure 5** illustrates an example of such a computing system 500, in accordance with some embodiments. The computing system 500 may include a computer or computer system 501A, which may be an individual computer system 501A or an arrangement of distributed computer systems. The computer system 501A includes one or more analysis modules 402 that are configured to perform various tasks according to some embodiments, such as one or more methods disclosed herein. To perform these various tasks, the analysis module 502 executes independently, or in coordination with, one or more processors 504, which is (or are) connected to one or more storage media 506. The processor(s) 504 is (or are) also connected to a network interface 507 to allow the computer system 501A to communicate over a data network 509 with one or more additional computer systems and/or computing systems, such as 501B, 501C, and/or 501D (note that computer systems 501B, 501C and/or 501D may or may not share the same architecture as computer system 501A, and may be located in different physical locations, e.g., computer systems 501A and 501B may be located in a processing facility, while in communication with one or more computer systems such as 501C and/or 501D that are located in one or more data centers, and/or located in varying countries on different continents).

A processor may include a microprocessor, microcontroller, processor module or subsystem, programmable integrated circuit, programmable gate array, or another control or computing device.

The storage media 506 may be implemented as one or more computer-readable or machine-readable storage media. Note that while in the example embodiment of Figure 5 storage media 506 is depicted as within computer system 501A, in some embodiments, storage media 506 may be distributed within and/or across multiple internal and/or external enclosures of computing system 501A and/or additional computing systems. Storage media 506 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some embodiments, computing system 500 contains one or more method execution module(s) 508. In the example of computing system 500, computer system 501A includes the method execution module 508. In some embodiments, a single method execution module may be used to perform some aspects of one or more embodiments of the methods disclosed herein. In other embodiments, a plurality of method execution modules may be used to perform some aspects of methods herein.

It should be appreciated that computing system 500 is merely one example of a computing system, and that computing system 500 may have more or fewer components than shown, may combine additional components not depicted in the example embodiment of Figure **5****,** and/or computing system 500 may have a different configuration or arrangement of the components depicted in **Figure 5****.** The various components shown in **Figure 5** may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 500, **Figure 5****),** and/or through manual control by a user who may make determinations regarding whether a given step, action, template, model, or set of curves has become sufficiently accurate for the evaluation of the subsurface three-dimensional geologic formation under consideration.

The foregoing description, for purposes of explanation, has been described with reference to specific embodiments. However, the illustrative discussions above are not intended to be exhaustive or limiting to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principles of the disclosure and its practical applications, to thereby enable others skilled in the art to best utilize the disclosed embodiments and various embodiments with various modifications as are suited to the particular use contemplated.

Certain examples of the present disclosure provide one or more of the following aspects:

According to a first aspect, there is provided a method of performing a multicomponent seismic survey, the method comprising: deploying a plurality of geophones at seismic receiver station locations to produce a layout of vertical component seismic sensors; deploying at least one fiber optic cable to produce a layout of horizontal crossline component seismic sensors and horizontal inline component seismic sensors at the seismic receiver station locations; obtaining a set of vertical component traces using the layout of vertical component seismic sensors; obtaining, simultaneously with the obtaining the set of vertical component traces, a set of horizontal crossline component traces and a set of horizontal inline component using the layout of horizontal crossline component seismic sensors and the horizontal inline component seismic sensors; and combining the set of horizontal crossline component traces, the set of horizontal inline component traces, and the set of vertical component traces to produce a multicomponent seismic dataset.

According to a second aspect, there is provided a method according to the first aspect, wherein the layout of vertical component seismic sensors, and the layout of horizontal crossline component seismic sensors and horizontal inline component seismic sensors, comprise a grid.

According to a third aspect, there is provided a method according to the first aspect, wherein each of the plurality of geophones comprise one of an inductive sensor, a piezoelectric sensor, or a Micro-Electro-Mechanical Sensor (MEMS).

According to a fourth aspect, there is provided a method according to the first aspect, wherein the at least one fiber optic cable is coupled to at least one interrogator, wherein the at least one interrogator is configured to convert backscatter from at least one laser to a value of one of strain or strain rate.

According to a fifth aspect, there is provided a method according to the fourth aspect, further comprising setting values for the at least one interrogator, wherein the values comprise a recording rate and a gauge length.

According to a sixth aspect, there is provided a method according to the first aspect, further comprising electronically selecting positions along the at least one fiber optic cable that correspond to the layout of horizontal crossline component seismic sensors and horizontal inline component seismic sensors.

According to a seventh aspect, there is provided a method according to the first aspect, further comprising transforming a domain of the set of horizontal crossline component traces and a domain of the set of horizontal inline component traces to a domain of the set of vertical component traces, wherein the domain of the set of horizontal crossline component traces and the domain of the set of horizontal inline component traces comprises one of strain or strain rate, and wherein the domain of the set of vertical component traces comprises one of velocity or acceleration.

According to an eighth aspect, there is provided a method according to the first aspect, further comprising applying at least one matching filter to match frequency spectra and timing between (1) the set of horizontal crossline component traces and the set of horizontal inline component traces and (2) the of the set of vertical component traces.

According to a ninth aspect, there is provided a method according to the eighth aspect, wherein the applying further comprises matching amplitudes, bandwidths, and phases between (1) the set of horizontal crossline component traces and the set of horizontal inline component traces and (2) the of the set of vertical component traces.

According to a tenth aspect, there is provided a method according to the first aspect, wherein the combining comprises performing vector rotation to assign orientations.

According to an eleventh aspect, there is provided a computing system, comprising: one or more processors; and a memory system comprising one or more non-transitory computer-readable media storing instructions that, when executed by at least one of the one or more processors, cause the computing system to perform operations for performing a multicomponent seismic survey, the operations comprising: defining a grid of seismic receiver station locations on a surface region of the Earth; deploying a plurality of geophones at the seismic receiver station locations, whereby a grid of vertical component seismic sensors at the grid of seismic receiver station locations is configured; deploying at least one fiber optic cable on the surface region, wherein the at least one fiber optic cable intersects each seismic receiver station location twice, wherein the at least one fiber optic cable is coupled to at least one interrogator, wherein the at least one interrogator is configured to convert backscatter from at least one laser to a value of one of strain or strain rate, whereby a grid of horizontal crossline component seismic sensors and horizontal inline component seismic sensors at the grid of seismic receiver station locations is configured; initiating a seismic shot at a shot point in the surface region; obtaining, for each seismic receiver station location, a vertical component trace of reflections of the seismic shot, whereby a set of vertical component traces for the grid of seismic receiver station locations is obtained; obtaining, simultaneously with and independently from the obtaining the vertical component trace of reflections of the seismic shot, and for each seismic receiver station location, a horizontal crossline component trace of the reflections of the seismic shot and a horizontal inline component trace of the reflections of the seismic shot, whereby a set of horizontal crossline component traces and a set of horizontal inline component traces for the grid of seismic receiver station locations is obtained; transforming a domain of the set of horizontal crossline component traces and a domain of the set of horizontal inline component traces to a domain of the set of vertical component traces, wherein the domain of the set of horizontal crossline component traces and the domain of the set of horizontal inline component traces comprises one of strain or strain rate, and wherein the domain of the set of vertical component traces comprises one of velocity or acceleration; combining the set of horizontal crossline component traces, the set of horizontal inline component traces, and the set of vertical component traces, from which a multicomponent seismic dataset is obtained; and storing the multicomponent seismic dataset.

According to a twelfth aspect, there is provided a computing system according to the eleventh aspect, wherein each geophone of the plurality of geophones comprises one of an inductive sensor, a piezoelectric sensor, or a Micro-Electro-Mechanical Sensor (MEMS).

According to a thirteenth aspect, there is provided a computing system according to the eleventh aspect, wherein the obtaining the set of horizontal crossline component traces and the set of horizontal inline component traces comprises selecting positions along the at least one fiber optic cable that correspond to the grid of seismic receiver locations.

According to a fourteenth aspect, there is provided a computing system according to the eleventh aspect, wherein the operations further comprise applying at least one matching filter to match frequency spectra and timing between (1) the set of horizontal crossline component traces and the set of horizontal inline component traces and (2) the of the set of vertical component traces.

According to a fifteenth aspect, there is provided a computing system according to the eleventh aspect, wherein the combining comprises assigning multicomponent trace header information to each of the set of horizontal crossline component traces, the set of horizontal inline component traces, and the set of vertical component traces.

According to a sixteenth aspect, there is provided a non-transitory computer-readable medium storing instructions that, when executed by one or more processors of a computing system, cause the computing system to perform operations for performing a multicomponent seismic survey, the operations comprising: defining a grid of seismic receiver station locations on a surface region of the Earth; deploying a plurality of geophones at the seismic receiver station locations, wherein each geophone of the plurality of geophones comprises one of an inductive sensor, a piezoelectric sensor, or a Micro-Electro-Mechanical Sensor (MEMS), whereby a grid of vertical component seismic sensors at the grid of seismic receiver station locations is configured; deploying at least one fiber optic cable on the surface region, wherein the at least one fiber optic cable intersects each seismic receiver station location twice, wherein the at least one fiber optic cable is coupled to at least one interrogator, wherein the at least one interrogator is configured to convert backscatter from at least one laser to a value of one of strain or strain rate, whereby a grid of horizontal crossline component seismic sensors and horizontal inline component seismic sensors at the grid of seismic receiver station locations is configured; initiating a seismic shot at a shot point in the surface region; obtaining, for each seismic receiver station location, a vertical component trace of reflections of the seismic shot, whereby a set of vertical component traces for the grid of seismic receiver station locations is obtained; obtaining, simultaneously with and independently from the obtaining the vertical component trace of the reflections of the seismic shot, and for each seismic receiver station location, a horizontal crossline component trace of the reflections of the seismic shot and a horizontal inline component trace of the reflections of the seismic shot, whereby a set of horizontal crossline component traces and a set of horizontal inline component traces for the grid of seismic receiver station locations is obtained, wherein the obtaining the set of horizontal crossline component traces and the set of horizontal inline component traces comprises selecting positions along the at least one fiber optic cable that correspond to the grid of seismic receiver locations; transforming a domain of the set of horizontal crossline component traces and a domain of the set of horizontal inline component traces to a domain of the set of vertical component traces, wherein the domain of the set of horizontal crossline component traces and the domain of the set of horizontal inline component traces comprises one of strain or strain rate, and wherein the domain of the set of vertical component traces comprises one of velocity or acceleration; applying at least one matching filter to match frequency spectra and timing between (1) the set of horizontal crossline component traces and the set of horizontal inline component traces and (2) the of the set of vertical component traces; combining the set of horizontal crossline component traces, the set of horizontal inline component traces, and the set of vertical component traces, from which a multicomponent seismic dataset is obtained, wherein the combining comprises assigning multicomponent trace header information to each of the set of horizontal crossline component traces, the set of horizontal inline component traces, and the set of vertical component traces; storing the multicomponent seismic dataset; displaying a representation of a subsurface of the surface region based on the multicomponent seismic dataset; and drilling a wellbore in the surface region based on the multicomponent seismic dataset.

According to a seventeenth aspect, there is provided a non-transitory computer-readable medium according to the sixteenth aspect, wherein the at least one fiber optic cable intersects each of the seismic receiver station locations at perpendicular angles.

According to an eighteenth aspect, there is provided a non-transitory computer-readable medium according to the sixteenth aspect, wherein the obtaining the set of horizontal crossline component traces and the set of horizontal inline component traces comprises setting values for the at least one interrogator, wherein the values comprise a recording rate and a gauge length.

According to a nineteenth aspect, there is provided a non-transitory computer-readable medium according to the sixteenth aspect, wherein the applying further comprises matching amplitudes, bandwidths, and phases between (1) the set of horizontal crossline component traces and the set of horizontal inline component traces and (2) the of the set of vertical component traces.

According to a twentieth aspect, there is provided a non-transitory computer-readable medium according to the sixteenth aspect, wherein the combining comprises performing vector rotation to assign orientations.

## Claims

1. A method (400) of performing a multicomponent seismic survey, the method comprising:
deploying (404) a plurality of geophones at seismic receiver station locations to produce a layout (200) of vertical component seismic sensors;
deploying (406) at least one fiber optic cable to produce a layout of horizontal crossline component seismic sensors and horizontal inline component seismic sensors at the seismic receiver station locations;
obtaining (410) a set of vertical component traces using the layout of vertical component seismic sensors;
obtaining (412), simultaneously with the obtaining the set of vertical component traces, a set of horizontal crossline component traces and a set of horizontal inline component using the layout of horizontal crossline component seismic sensors and the horizontal inline component seismic sensors; and
combining (364, 418) the set of horizontal crossline component traces, the set of horizontal inline component traces, and the set of vertical component traces to produce a multicomponent seismic dataset.

2. The method of claim 1, wherein the layout of vertical component seismic sensors, and the layout of horizontal crossline component seismic sensors and horizontal inline component seismic sensors, comprise a grid.

3. The method of claim 1 or 2, wherein one or more or all of the plurality of geophones comprise one or more of: an inductive sensor; a piezoelectric sensor; and a Micro-Electro-Mechanical Sensor, MEMS.

4. The method of claim 1, 2 or 3,
wherein the at least one fiber optic cable is coupled to at least one interrogator, wherein the at least one interrogator is configured to convert backscatter from at least one laser to a value of one of strain or strain rate,
optionally further comprising setting values for the at least one interrogator, wherein the values comprise a recording rate and/or a gauge length.

5. The method of any preceding claim, further comprising selecting (e.g. electronically) positions along the at least one fiber optic cable that correspond to the layout of horizontal crossline component seismic sensors and horizontal inline component seismic sensors.

6. The method of any preceding claim, further comprising transforming (340, 414) a domain of the set of horizontal crossline component traces and a domain of the set of horizontal inline component traces to a domain of the set of vertical component traces, wherein the domain of the set of horizontal crossline component traces and the domain of the set of horizontal inline component traces comprises at least one of strain and strain rate, and wherein the domain of the set of vertical component traces comprises at least one of velocity and acceleration.

7. The method of any preceding claim,
further comprising applying (352, 416) at least one matching filter to match frequency spectra and/or timing between (1) the set of horizontal crossline component traces and the set of horizontal inline component traces and (2) the of the set of vertical component traces,
optionally wherein the applying further comprises matching (352, 416) amplitudes, bandwidths, and/or phases between (1) the set of horizontal crossline component traces and the set of horizontal inline component traces and (2) the of the set of vertical component traces.

8. The method of any preceding claim, wherein the combining comprises performing vector rotation to assign orientations.

9. The method of any preceding claim, comprising:
defining (402) a grid of seismic receiver station locations on a surface region of the Earth;
deploying (404) a plurality of geophones at the seismic receiver station locations, whereby a grid of vertical component seismic sensors at the grid of seismic receiver station locations is configured;
deploying (406) at least one fiber optic cable on the surface region, wherein the at least one fiber optic cable intersects each seismic receiver station location twice, wherein the at least one fiber optic cable is coupled to at least one interrogator, wherein the at least one interrogator is configured to convert backscatter from at least one laser to a value of one of strain or strain rate, whereby a grid of horizontal crossline component seismic sensors and horizontal inline component seismic sensors at the grid of seismic receiver station locations is configured;
initiating (408) a seismic shot at a shot point in the surface region;
obtaining (410), for each seismic receiver station location, a vertical component trace of reflections of the seismic shot, whereby a set of vertical component traces for the grid of seismic receiver station locations is obtained;
obtaining (412), simultaneously with and independently from the obtaining the vertical component trace of reflections of the seismic shot, and for each seismic receiver station location, a horizontal crossline component trace of the reflections of the seismic shot and a horizontal inline component trace of the reflections of the seismic shot, whereby a set of horizontal crossline component traces and a set of horizontal inline component traces for the grid of seismic receiver station locations is obtained;
transforming (340, 414) a domain of the set of horizontal crossline component traces and a domain of the set of horizontal inline component traces to a domain of the set of vertical component traces, wherein the domain of the set of horizontal crossline component traces and the domain of the set of horizontal inline component traces comprises one of strain or strain rate, and wherein the domain of the set of vertical component traces comprises one of velocity or acceleration;
combining (364, 418) the set of horizontal crossline component traces, the set of horizontal inline component traces, and the set of vertical component traces, from which a multicomponent seismic dataset is obtained; and
storing (420) the multicomponent seismic dataset.

10. The method of any preceding claim, wherein the obtaining the set of horizontal crossline component traces and the set of horizontal inline component traces comprises selecting positions along the at least one fiber optic cable that correspond to the grid of seismic receiver locations.

11. The method of any preceding claim, wherein the combining comprises assigning multicomponent trace header information to each of the set of horizontal crossline component traces, the set of horizontal inline component traces, and the set of vertical component traces.

12. The method of any preceding claim, further comprising:
displaying (422) a representation of a subsurface of a surface region based on the multicomponent seismic dataset; and
drilling (424) a wellbore in the surface region based on the multicomponent seismic dataset.

13. The method of any preceding claim, wherein the at least one fiber optic cable intersects each of the seismic receiver station locations at perpendicular angles.

14. A computing system (500), comprising:
one or more processors (504); and
a memory system comprising one or more non-transitory computer-readable media (506) storing instructions that, when executed by at least one of the one or more processors (504), cause the computing system to perform the method of any preceding claim.

15. A non-transitory computer-readable medium storing instructions that, when executed by one or more processors of a computing system, cause the computing system to perform the method of any of claims 1 to 13.
